# EUROPÄISCHE PATENTANMELDUNG

(11) **EP 4 513 745 A1**
(43) Veröffentlichungstag der Anmeldung: **26.02.2025**
(21) Anmeldenummer: 24195791.9
(22) Anmeldetag: 22.08.2024
(51) Int. Cl.: H02S 10/40, H02S 20/00, H02S 30/10

(54) **MOBILE PHOTOVOLTAIKANLAGE, INSBESONDERE ZUR AUFLAGERUNG AUF EINEM CONTAINER, UND ZUGEHÖRIGES TRAGGESTELL**

(30) Priorität: 25.08.2023 DE 102023208149
(71) Anmelder: SunPlate GmbH, 97424 Schweinfurt (DE)
(72) Erfinder: BECK, Bernhard, 97332 Volkach (DE)
(74) Vertreter: FDST Patentanwälte

(57) **Zusammenfassung**

Es werden eine mobile Photovoltaikanlage (2), insbesondere zur Auflagerung auf einem Container (7), sowie ein Traggestell (4) für eine solche Photovoltaikanlage (2) angegeben. Das Traggestell (4) umfasst zwei zueinander parallele, sich in einer Querrichtung (x) erstreckende Querträger (8), an deren jeweiligen Enden insgesamt vier Auflageflächen (18) zur Auflagerung des Traggestells (4) auf einer Unterkonstruktion (22), insbesondere den Container-Ecken (22), ausgebildet sind. Das Traggestell (4) umfasst weiterhin einen zentralen Längsträger (10), der sich in einer Längsrichtung (y) senkrecht zu den Querträgern (8) erstreckt und jeweils mittig mit beiden Querträgern (8) verbunden ist. Das Traggestell (4) umfasst außerdem mehrere Modulträger (12) zur Halterung von Photovoltaikmodulen (6,6'). Hierbei ist jeder der Modulträger (12) tragend an dem zentralen Längsträger (10) befestigt. Die Photovoltaikanlage (2) umfasst das Traggestell (4) sowie mehrere auf den Modulträgern (12) des Traggestells (4) befestigte Photovoltaikmodule (6,6').

## Beschreibung

Die Erfindung bezieht sich auf eine mobile Photovoltaikanlage (PV-Anlage), die insbesondere zur Auflagerung auf einem Container vorgesehen ist. Die Erfindung bezieht sich weiterhin auf ein zugehöriges Traggestell für Photovoltaikmodule (PV-Module) einer solchen PV-Anlage.

Container, insbesondere ISO-Container gemäß der ISO-Norm 668, werden insbesondere in Form von Frachtcontainern zum Warentransport, oder in Form von Büro-, Schul-, Wohn- oder Sanitärcontainern als Ersatz für entsprechende Gebäude verwendet. In weiteren Anwendungen werden Container zur Einhausung von industriellen Anlagen, z.B. Maschinen oder Computerhardware, verwendet. In vielen dieser Anwendungsfälle ist ein Stromanschluss an den Container erforderlich.

Andererseits werden Container aber häufig als provisorische und meist temporäre Lösungen an Orten mit mangelhafter oder gestörter elektrischer Infrastruktur aufgestellt, z.B. auf Baustellen und Brachflächen oder in Katastrophengebieten. Eine lokale und insbesondere autarke elektrische Energieversorgung von Containern, insbesondere unter Nutzung von Photovoltaik, ist daher in vielen Fällen wünschenswert oder sogar notwendig. Die Nutzung von Photovoltaik zur elektrischen Energieversorgung von Containern ist aber im Übrigen auch in Einsatzsituation wünschenswert, in denen an sich eine elektrische Infrastruktur zu Verfügung stände, da dies der Einsparung fossiler Energieträger dient.

In diesem Zusammenhang werden bereits mobile Photovoltaikanlagen (PV-Anlagen) vertrieben, die speziell für die Auflagerung auf Containern konzipiert sind. Eine solche PV-Anlage umfasst in der Regel ein (meist aus Stahlprofilen bestehendes) Traggestell, an dem mehrere PV-Module montiert sind.

Typisch für solche mobilen PV-Anlagen ist, dass sie - entsprechend der provisorischen Natur der Container - an häufig wechselnden Orten eingesetzt werden. Entsprechend häufig werden solche mobilen PV-Anlagen in fertig montiertem Zustand transportiert, aufgestellt und wieder abgebaut, was mit einer hohen mechanischen Beanspruchung der mobilen PV-Anlagen und der darin verbauten PV-Module einhergeht.

Um für diese Einsatzbedingungen geeignet zu sein, sollten eine mobile PV-Anlage und deren Traggestell einerseits im Sinne eines unaufwändigen Transports und einer unaufwändigen Montage und Demontage möglichst leicht und kompakt sein. Andererseits muss das Traggestell einer solchen PV-Anlage aber in der Lage sein, die daran gehaltenen PV-Module gut vor mechanischen Belastungen beim Transport und vor allem bei der Montage und Demontage zu schützen, um eine Beschädigung der spröden und zerbrechlichen PV-Module zu vermeiden. Traggestelle von mobilen PV-Anlagen werden daher in der Regel sehr stabil und verwindungsfest gestaltet, was dem Wunsch nach geringem Gewicht und kleiner Baugröße häufig zuwiderläuft. Meistens werden Traggestelle von mobilen PV-Anlagen als Rahmenstruktur mit mehreren parallelen Längsträgern und dazu im rechten Winkel angeordneten Querträgern ausgeführt. Die PV-Module werden hierbei oft - unmittelbar oder mittelbar über Modulträger der Rahmenstruktur - zwischen zwei Längsträgern der Rahmenstruktur aufgehängt.

Der Erfindung liegt die Aufgabe zugrunde, eine insbesondere zur Auflagerung auf einem Container vorgesehene mobile PV-Anlage und ein zugehöriges Traggestell in Hinblick auf die vorstehend beschriebenen Anforderungen zu verbessern. Die PV-Anlage und das zugehörige Traggestell sollen also möglichst kompakt und leicht sein, dabei aber die von dem Traggestell gehaltenen PV-Module effektiv vor Beschädigungen, insbesondere beim Transport und bei der Montage bzw. Demontage, schützen.

Bezüglich eines Traggestells für eine mobile Photovoltaikanlage wird diese Aufgabe erfindungsgemäß gelöst durch die Merkmale des Anspruchs 1. Bezüglich einer mobilen Photovoltaikanlage wird die obige Aufgabe erfindungsgemäß gelöst durch die Merkmale des Anspruchs 16. Vorteilhafte und teils für sich gesehen erfinderische Ausgestaltungen und Weiterbildungen der Erfindung sind in den Unteransprüchen und der nachfolgenden Beschreibung dargelegt.

Das erfindungsgemäße Traggestell ist für eine mobile PV-Anlage entwickelt, die insbesondere zur Auflagerung auf einem Container (vorzugsweise einem ISO-Container, insbesondere für einen der eingangs genannten Einsatzzwecke) gedacht ist. Die mobile PV-Anlage und das zugehörige Traggestell können im Rahmen der Erfindung allerdings auch für andere Verwendungen vorgesehen und ausgebildet sein, z.B. zur Auflage auf einem Garagendach oder sonstigen Flachdach, als Überdachung eines Carports, als Sonnenschutz einer Terrasse oder eines öffentlichen Platzes, etc. "Mobil" ist die PV-Anlage in allen diesen Fällen insofern, als das Traggestell fern des späteren Einsatzortes mit den PV-Modulen und zugehörigen elektrischen Beschaltungsteilen, z.B. einem Umrichter oder Stromwandler, einer Schutzschalteinrichtung, Kabeln und/oder mindestens einem Anschlussverbinder (insbesondere einer Steckdose) bestückt werden kann, so dass die PV-Anlage als fertig hergestellte und funktionstüchtige Einheit zu dem Einsatzort transportiert werden kann.

Das Traggestell umfasst zwei zueinander parallele Querträger, die sich in einer Querrichtung erstrecken. In der bevorzugten Montageposition des Traggestells auf einem Container erstrecken sich die Querträger entlang der oberen Querkanten des Containers und weisen in diesem Fall insbesondere eine der Containerbreite entsprechende Länge auf. An den jeweiligen Enden der Querträger sind (insgesamt vier) Auflageflächen zur Auflagerung des Traggestells auf einer (nicht zu dem Traggestell gehörenden) Unterkonstruktion ausgebildet. Bei einer Auflagerung des Traggestells auf einem ISO-Container handelt es sich bei dieser Unterkonstruktion insbesondere um die genormten Container-Ecken (auch Container-Eckbeschläge; engl.: container castings) im Bereich des Containerdaches, über die ISO-Container bestimmungsgemäß untereinander oder mit einem Transportmittel gekoppelt werden. Bei Auflagerung des Traggestells auf dem Dach einer Garage handelt es sich bei der mit den Auflageflächen zusammenwirkenden Unterkonstruktion insbesondere um den oberen Rand der Seitenwände der Garage, der im Vergleich zu der eigentlichen Dachfläche regelmäßig eine wesentlich höhere Belastbarkeit aufweist. Bei Verwendung der PV-Anlage als Überdachung eines Carports oder als Sonnenschutz ist die Unterkonstruktion beispielsweise durch im Boden verankerte Stützen gebildet.

Im Vergleich zu der Länge der Querträger oder der Gesamtfläche des Traggestells sind die Auflageflächen vorzugsweise klein (d.h. annähernd punktförmig) ausgebildet. Beispielsweise nimmt jede der Auflageflächen nur 1% bis 10% der Länge und Breite des Traggestells ein

Das Traggestell umfasst weiterhin einen zentralen Längsträger, der sich in einer Längsrichtung senkrecht zu den Querträgern erstreckt. Bei Auflagerung des Traggestells auf einem Container erstreckt sich der Längsträger in Längsrichtung des Containers und weist insbesondere eine der Containerlänge entsprechende Länge auf. Der zentrale Längsträger ist jeweils mittig (d.h. zentral zwischen den Enden des jeweiligen Querträgers) mit beiden Querträgern verbunden. Die Querträger bilden somit zusammen mit dem zentralen Längsträger eine H-förmige Struktur. Die Querträger und der Längsträger liegen dabei in einer (von der Längsrichtung und der Querrichtung aufgespannten) Ebene, die auch als "Traggestell-Ebene" bezeichnet wird. In der Regel, und zwar sowohl in der vorgesehenen Montagelage (z.B. auf einem Containerdach) als auch während des Transports, sind die PV-Anlage und das zugehörige Traggestell derart orientiert, dass die Traggestell-Ebene etwa horizontal ausgerichtet ist.

Die Querträger und der Längsträger sind vorzugsweise aus üblichen Trägermaterialien, insbesondere aus Stahl, gefertigt.

Vorzugsweise bildet der zentrale Längsträger die einzige tragende Struktur des Traggestells, die die Querträger miteinander verbindet. Grundsätzlich kann das Traggestell aber in weniger bevorzugten Ausführungen der Erfindung abweichend weitere Längsverbindungen zwischen den Querträgern aufweisen. Solche weiteren Längsverbindungen, sofern vorhanden, sind dann aber in jedem Fall wesentlich schwächer ausgebildet sind als der zentrale Längsträger, so dass der zentrale Längsträger weiterhin die Stabilität, insbesondere die Verwindungssteifigkeit, des Traggestells maßgeblich bestimmt.

Das Traggestell umfasst schließlich mehrere Modulträger, die zur Halterung von PV-Modulen vorgesehen und ausgebildet sind. Jeder der Modulträger ist hierbei tragend an dem zentralen Längsträger befestigt. "Tragend befestigt" heißt hierbei, dass der zentrale Längsträger zumindest einen überwiegenden Teil des Gewichts (insbesondere mindestens 70%, 80% oder 90% des Gewichts) der Modulträger (und der ggf. darauf befestigten PV-Module) trägt. In einer bevorzugten Ausführung der Erfindung sind die Modulträger freitragend an dem zentralen Längsträger befestigt, so dass der zentrale Längsträger in diesem Fall sogar das gesamte Gewicht eines jeden Modulträgers sowie des ggf. darauf befestigten PV-Moduls trägt. Insbesondere sind die von dem Längsträger abgewandten Freienden der Modulträger dabei an den Enden der Querträgern nicht fixiert. Sie sind vielmehr nur über den Längsträger mit den Querträgern verbunden.

In einer besonders bevorzugten Ausführung der Erfindung sind die Modulträger derart an dem zentralen Längsträger befestigt, dass je zwei der Modulträger miteinander in Querrichtung fluchtend von gegenüberliegenden Seiten des Längsträgers in den zwischen den Querträgern gebildeten Innenraum des Traggestells hineinragen. Diese zwei in Querrichtung gegenüberliegenden Modulträger sind hierbei vorzugsweise (insbesondere durch eine den Längsträger durchsetzende Verschraubung) unmittelbar aneinander fixiert, so dass sich die von diesen Modulträgern jeweils auf den Längsträger ausgeübten Drehmomente vollständig oder zumindest teilweise kompensieren, ohne nennenswerte Zugspannungen in das Material des Längsträgers einzuleiten.

Durch die erfindungsgemäße H-förmige Trägerstruktur, deren Stabilität, insbesondere Verwindungssteifigkeit, maßgeblich durch den einen zentralen Längsträger bestimmt wird, wird im Vergleich zu herkömmlichen Traggestellen mit rahmenförmiger Trägerstruktur (und entsprechend mit mehreren Längsträgern) Material und Gewicht gespart. Dennoch wird durch die erfindungsgemäße H-förmige Trägerstruktur im Vergleich zu herkömmlichen rahmenartigen Traggestellen eine hohe Verwindungssteifigkeit erzielt. Denn während herkömmliche rahmenartige Traggestelle bei einer unsymmetrischen Belastung des Traggestells - z.B. bei unsymmetrischer Aufhängung des Traggestells an einem Kranhaken - vorwiegend auf Biegung belastet werden und daher einer Verwindung des Traggestells nur vergleichsweise ineffektiv entgegenwirken können, wird der zentrale Längsträger des erfindungsgemäßen Traggestells (jedenfalls nahezu) ausschließlich auf Torsion belastet und setzt der Verwindung daher aufgrund der vergleichsweise hohen Torsionsfestigkeit des Trägermaterials einen hohen Widerstand entgegen.

Durch die tragende (insbesondere freitragende) Aufhängung der Modulträger an dem zentralen Längsträger wird weiterhin der Effekt erzielt, dass eine dennoch nicht gänzlich vermeidbare Verwindung des Traggestells beim Transport sowie bei der Montage und Demontage nicht oder nur in geringem Maße auf die an den Modulträgern befestigten PV-Module übertragen wird. Vor allem wird durch die H-förmige Trägerstruktur erreicht, dass die Querträger bei einer 4-Punkt-Aufhängung an einem Kranhaken "arbeiten" (d.h. sich unter dem Eigengewicht der PV-Anlage geringfügig nach oben und innen biegen können), ohne potentiell schädigende Kräfte auf die an den Modulträgern befestigten PV-Module auszuüben. Insbesondere wird hierbei eine Scherbelastung der PV-Module in der Modulebene (die aufgrund der Härte der PV-Module zu hohen Materialspannungen führen würde) vermieden.

Die zur Längs- und Querrichtung (und somit zu der Traggestell-Ebene) senkrechte Richtung wird nachfolgend - unabhängig von der tatsächlichen Orientierung des Traggestells in dem umgebenden Raum - als Hochrichtung bezeichnet. Die Ausdehnung der Querträger, des zentralen Längsträgers und anderer Strukturen der PV-Anlage wird entsprechend als die "Höhe" des jeweiligen Bauteils bezeichnet. Strukturen der PV-Anlage und des Traggestells, die in der bestimmungsgemäßen Montageposition nach oben weisen, werden nachfolgend - wiederum unabhängig von der tatsächlichen Orientierung des Traggestells in dem umgebenden Raum - als "Oberseite" bezeichnet, Hierzu entgegengesetzt angeordnete Strukturen, die in der Montageposition dem Untergrund (z.B. einem Containerdach) zugewandt sind, werden entsprechend als "Unterseite" bezeichnet.

Im Sinne dieser Definitionen weist der zentrale Längsträger zur Erzielung einer besonders hohen Torsionssteifigkeit eine Höhe auf, die in zweckmäßiger Ausgestaltung der Erfindung über 50%, bevorzugt über 75%, insbesondere über 90% der Höhe der Querträger beträgt. In einer besonders bevorzugten Ausführung der Erfindung weisen der Längsträger und die Querträger eine gleiche Höhe auf.

Ebenfalls zur Erzielung einer besonders hohen Torsionssteifigkeit bei geringem Gewicht ist der Längsträger bevorzugt als Rohr, insbesondere mit rundem Querschnitt oder rechteckigem Querschnitt mit gerundeten Ecken, ausgebildet.

Zusätzlich oder alternativ hierzu sind auch die Querträger vorzugsweise als Rohr, insbesondere mit rundem Querschnitt oder rechteckigem Querschnitt (vorzugsweise mit gerundeten Ecken), ausgebildet. Der Vorteil dieser Ausgestaltung liegt hier allerdings weniger in der hohen Torsionssteifigkeit (zumal die Querträger in der Regel kaum auf Torsion belastet werden. Der Hauptvorteil der rohrförmigen Struktur der Querträger besteht vielmehr in der Möglichkeit, mechanische und elektrische Funktionsbauteile der PV-Anlage geschützt im Inneren der Querträger integrieren zu können. Insbesondere sind vorzugsweise mindestens ein elektrisches Beschaltungsteil für die Photovoltaikmodule, insbesondere ein Umrichter oder Stromwandler, eine Schutzschalteinrichtung, ein Anschlussverbinder (insbesondere eine Steckdose) und/oder ein Anschlusskabel, in einem der Querträger aufgenommen.

In einer besonders vorteilhaften Ausführung der Erfindung sind an dem Traggestell, und insbesondere an einem der Querträger desselben, sowohl eine Steckdose (Buchse) als auch ein endseitig mit einem Stecker versehenes Anschlusskabel angebracht, über die die PV-Anlage mit weiteren PV-Anlagen zusammengeschaltet (d.h. elektrisch parallelgeschaltet) werden kann. Das fest mit dem Traggestell verbundene Anschlusskabel dient hierbei ausschließlich als Stromzuleitung, während die Steckdose ausschließlich als Stromableitung dient.

Die Ausstattung der PV-Anlage mit einem fest angeschlagenen Anschlusskabel erleichtert hierbei die Bedienung und erhöht die Betriebssicherheit der PV-Anlage, da hierdurch - im Vergleich zu einer mit zwei Steckdosen ausgestatten PV-Anlage - eine falsche Verschaltung der PV-Anlage mit benachbarten PV-Anlagen unmöglich gemacht wird. Zudem wird durch das fest angeschlagene Stromzuleitungskabel verhindert, dass ein solches Kabel fälschlicherweise mit dem quellenseitigen Ende zuerst angeschlossen wird, wodurch das mündungsseitige Ende des Kabels noch vor dem Anschluss an der PV-Anlage unter Spannung geraten könnte.

In einer vorteilhaften Weiterentwicklung dieser Ausgestaltung ist das fest angeschlagene Anschlusskabel in einer Ruhelage innerhalb des von dem Traggestell umschlossenen Volumens (insbesondere ganz oder teilweise innerhalb eines der Querträger) aufgenommen und kann zum Anschluss an einer benachbarten PV-Anlage aus dieser Ruhelage ausgezogen werden. Auf das Abschlusskabel wirkt hierbei vorzugsweise eine Rückzugskraft, die das Anschlusskabel automatisch in die Ruhelage einzieht. Beispielsweise ist das Anschlusskabel hierzu als Spiralkabel ausgestaltet. Alternativ hierzu ist das Anschlusskabel auf einer federbelasteten (und somit selbstaufwickelnden) Wickeltrommel aufgewickelt.

Die Ausstattung der mobilen PV-Anlage sowohl mit einer Steckdose (Buchse) als auch mit einem endseitig mit einem Stecker versehenen, insbesondere automatisch einziehenden Anschlusskabel wird als eigenständige Erfindung angesehen, die auch unabhängig von den übrigen Merkmalen der erfindungsgemäßen PV-Anlage vorteilhaft einsetzbar ist.

In bevorzugten Ausführungsformen umfasst das Traggestell zusätzlich zu dem Längsträger und den Querträgern mindestens zwei (jeweils insbesondere dreieckige) Versteifungsbleche, die sowohl mit dem Längsträger als auch mit den Querträgern verbunden (insbesondere verschraubt oder verschweißt) sind. Grundsätzlich ist im Rahmen der Erfindung möglich, dass die mechanische Verbindung der Querträger und des Längsträgers ausschließlich über diese Versteifungsbleche erfolgt. In bevorzugter Ausführung sind die Querträger und der Längsträger aber auch unmittelbar miteinander verbunden (insbesondere verschraubt oder verschweißt). Die in diesem Fall optionalen Versteifungsbleche dienen hierbei zu zusätzlichen Stabilisierung dieser Verbindung.

Um eine Beschädigung der PV-Module durch Stöße während des Transports oder bei der Montage oder Demontage der PV-Anlage zu verhindern, umfasst das Traggestell vorzugsweise zwei Anschlagschutzleisten, die sich jeweils zwischen einander in Längsrichtung gegenüberliegenden Enden der Querträger erstrecken und die dem Traggestell daher den Anschein einer herkömmlichen Rahmstruktur geben. Im Gegensatz zu einer solchen haben die Anschlagschutzleisten bei bevorzugten Ausführungsformen des erfindungsgemäßen Traggestells aber keine tragende Wirkung; sie tragen also mit anderen Worten nicht wesentlich zur Stabilität, insbesondere Verwindungssteifigkeit des Traggestells bei.

Um eine potentiell schädigende Ausübung von Kräften durch die Querträger auf die Modulträger und die ggf. darauf befestigten PV-Module zu vermeiden, sind die Anschlagschutzleisten sogar in bevorzugter Ausführung der Erfindung gar nicht unmittelbar an den Querträgern fixiert. Die Anschlagschutzleisten sind in dieser Ausführungsform vielmehr nur an angrenzenden Modulträgern befestigt. In alternativen Ausführungen der Erfindung sind die Anschlagschutzleisten an den Querträgern über eine bewegliche oder elastische Verbindung fixiert, so dass wiederum eine Ausübung von Kräften durch die Querträger auf die Modulträger und die ggf. darauf befestigten PV-Module nicht oder nur in unschädlich geringem Maß möglich ist. In einer wiederum weiteren Ausführung der Erfindung sind die Anschlagschutzleisten zur Erzielung desselben Effekts nur an den Enden der Querträger fixiert, aber mit den Modulträgern unverbunden.

Bei Ausführungsformen der Erfindung, bei denen die PV-Anlage und das zugehörige Traggestell zur Auflagerung auf einem (ISO-)Container vorgesehen ist, ist vorzugsweise in dem jeweiligen Bereich der an den Enden der Querträger vorgesehenen Auflageflächen jeweils eine Koppelstruktur ausgebildet, über die der Querträger mit einer Container-Ecke koppelbar ist. Die Koppelstruktur ist vorzugsweise als (ein- oder mehrteiliger) Vorsprung ausgestaltet, der in eine Aufnahme der Container-Ecke eingreift. Alternativ hierzu ist die Koppelstruktur als Öffnung ausgebildet, die es ermöglicht, den Querträger mittels eines separaten Verbindungselements (wie z.B. einer Twist-Lock-Containerverriegelung) zu koppeln.

Vorzugsweise sind die Auflageflächen an den Enden der Querträger so gestaltet, dass sie gegenüber einer Unterseite der Querträger und einer Unterseite des Längsträgers (insbesondere geringfügig, z.B. um 10 bis 50 mm) hervorspringen. Die Auflageflächen dienen somit als Abstandsstücke, die sicherstellen, dass das Traggestell bei Auflagerung auf einem planen Untergrund wie z.B. einem Containerdach den Untergrund nur mit den Auflageflächen berührt, während die Unterseite der Querträger und die Unterseite des Längsträgers ansonsten durchwegs von dem Untergrund beabstandet sind. Hierdurch wird die Gefahr einer Beschädigung des Untergrunds (insbesondere des Containerdachs) durch die PV-Anlage oder eine Beschädigung der PV-Anlage durch den Untergrund, insbesondere während der Montage oder Demontage der PV-Anlage, erheblich reduziert.

In einer vorteilhaften Ausführung der Erfindung ist an den Enden der Querträger gegenüberliegend zu den (im Bereich der Auflageflächen ausgebildeten) Koppelstrukturen jeweils eine Gegenkoppelstruktur ausgebildet, die eine Kopplung des Traggestells mit einem weiteren (insbesondere gleichartigen) Traggestell ermöglicht. Die Gegenkoppelstrukturen ermöglichen hierbei, mehrere mobile PV-Anlagen zur Transport- oder Lagerzwecken zu einem zusammenhängenden Stapel zu verbinden. Jede Gegenkoppelstruktur umfasst bevorzugt mindestens Aufnahme, die komplementär zu der ggf. als Vorsprung oder Set von Vorsprüngen ausgebildeten Koppelstruktur gestaltet ist oder in die ein separates Verbindungselement (wie z.B. eine Twist-Lock-Containerverriegelung) einsetzbar ist.

Gemäß einer optionalen Weiterbildung dieser Ausgestaltung ist mindestens einer der Koppelstrukturen (vorzugsweise jeder Koppelstruktur jeweils) ein Verriegelungselement zugeordnet, das dazu dient, die PV-Anlage in ihrer Montageposition auf einem Untergrund (insbesondere in einer Container-Ecke eines Containerdachs) oder in der Transportposition gestapelt auf einer weiteren PV-Anlage zu sichern (d.h. zu fixieren). Durch das oder jedes Verriegelungselement wird hierbei verhindert, dass sich die PV-Anlage - z.B. aufgrund einer Windlast - von dem Untergrund bzw. von der anderen PV-Anlage abhebt. Das oder jedes Verriegelungselement ist beispielsweise als Schieberiegel, Schwenkriegel oder als (optional federbelastete) Schnappnase ausgebildet.

In einer vorteilhaften Weiterentwicklung sind mehrere (insbesondere alle) Verriegelungselemente über eine Betätigungsmechanik (beispielsweise mittels einer Schubstange und/oder mindestens eines Bowdenzugs) zur gemeinsamen Verriegelung und/oder Entriegelung gekoppelt. Die Betätigungsmechanik ist beispielsweise mittels eines an einem der Querträger angebrachten Hebels manuell betätigbar. In einer weiteren Ausführung ist das oder jede Verriegelungselement über eine Betätigungsmechanik mit einem Lastpunkt (beispielsweise einer Öse oder einem Haken) gekoppelt oder im Bereich eines Lastpunktes angeordnet, an dem die PV-Anlage bestimmungsgemäß zum Einheben und Ausheben im Zuge des Montage- oder Demontageprozessen aufgehängt oder aufgelegt wird. Bei dem Lastpunkt handelt es sich beispielsweise um eine Öse, an der ein Karabinerhaken einer mit einem Kranhaken verbundenen Anschlagkette eingehakt wird oder um eine Aufnahme für die Gabel eines Gabelstaplers. Die Betätigungsmechanik ist hierbei derart ausgestaltet, dass das oder jedes zugeordnete Verriegelungselement automatisch entriegelt wird, wenn in den Lastpunkt eine Zug- bzw. Hubkraft eingeleitet wird. Die Betätigungsmechanik ist hierbei vorzugsweise in einem der Querträger aufgenommen.

In einer weiteren Weiterentwicklung weist das oder jedes Verriegelungselement eine stufige (d.h. treppenförmige) Verriegelungskontur auf, die es erlaubt, die PV-Anlage an verschieden starken Untergrundstrukturen mit jeweils geringem Spiel zu verriegeln.

Auch die vorstehend beschriebenen, insbesondere jeweils mit einer stufenförmigen Verriegelungskontor versehenen und/oder mit einer gemeinsamen Betätigungsmechanik gekoppelten und/oder beim Anheben der PV-Anlage automatisch entriegelnden Verriegelungselemente werden als eigenständige Erfindung angesehen, die auch unabhängig von den übrigen Merkmalen der erfindungsgemäßen PV-Anlage vorteilhaft einsetzbar ist.

In einer vorteilhaften Ausführung sind die Modulträger derart gestaltet, dass sie sich mit zunehmenden Abstand zu dem zentralen Längsträger verjüngen. Mit dieser Gestaltung wird dem Umstand Rechnung getragen, dass einzelne Abschnitte der Modulträger aufgrund der tragenden Aufhängung an dem zentralen Längsträger umso mehr Gewicht tragen müssen je näher sie an dem Längsträger angeordnet sind. Die sich vom Längsträger weg verjüngende Form der Modulträger stellt somit eine in Hinblick auf Gewicht und Stabilität optimierte Gestaltung dar.

In einer vorteilhaften Ausführung sind die Querträger zumindest einseitig, bevorzugt aber beidseitig teleskopierbar, so dass der Abstand der an demselben Querträger ausgebildeten Auflageflächen an unterschiedliche Einbausituationen anpassbar ist. Dies ist beispielsweise bei Ausführungsformen der PV-Anlage und des zugehörigen Traggestells sinnvoll, die zur Auflagerung auf einem Garagendach oder als Sonnenschutz für eine Terrasse vorgesehen sind, da in diesen Anwendungsfällen der Abstand zwischen Stützstellen einer Unterkonstruktion des Traggestells (z.B. den Seitenwänden der Garage) - anders als bei ISO-Containern - nicht einheitlich vorgegeben ist.

Die erfindungsgemäße mobile PV-Anlage umfasst das vorstehend beschriebene erfindungsgemäße Traggestell, insbesondere in einer der vorstehend beschriebenen Ausgestaltungsvarianten, sowie mehrere auf den Modulträgern des Traggestells befestigte PV-Module.

In einer vorteilhaften Ausführung der PV-Anlage sind die Modulträger dabei derart gegenüber einer Oberseite des zentralen Längsträgers und/oder einer Oberseite der Querträger zurückversetzt an dem zentralen Längsträger befestigt, dass die auf den Modulträgern befestigten PV-Module von dem Längsträger und/oder von den Querträgern in Hochrichtung überragt werden. Hierdurch werden die PV-Module effektiv durch das Traggestell geschützt. Grundsätzlich könnte das Traggestell im Rahmen der Erfindung aber auch derart gestaltet sein, dass die PV-Module in Hochrichtung über den Längsträger und/oder über die Querträger hinausstehen.

Bevorzugt sind die PV-Module derart an den Modulträgern befestigt, dass sie dachartig (insbesondere nach Art eines Satteldachs) angestellt, also gegenüber der Querrichtung in einem Neigungswinkel angeordnet sind. Der Neigungswinkel ist vorzugsweise klein und beträgt z.B. 3° bis 12°, insbesondere 5° bis 10°. Hierdurch werden der Ablauf von Regenwasser und - damit verbunden - die Selbstreinigung der PV-Module begünstigt.

In einer bevorzugten Ausführungsform der PV-Anlage ist unter mindestens einem der PV-Module ein elektrisches Beschaltungsteil für die PV-Module, insbesondere ein Umrichter oder Stromwandler und/oder eine Schutzschalteinrichtung, angebracht. Das Beschaltungsteil ist hierbei wahlweise unmittelbar an dem PV-Modul oder alternativ an dem zugehörigen Modulträger des Traggestells befestigt. Um dieses unter dem PV-Modul verborgene Beschaltungsteil auch im Montagezustand der PV-Anlage, z.B. auf einem Containerdach, warten zu können, ohne die PV-Anlage oder das PV-Modul demontieren zu müssen, ist das oder jedes PV-Modul, unter dem ein oder mehrere elektrische Beschaltungsteile angeordnet sind, vorzugsweise klappbar oder verschiebbar an dem oder jeden zugehörigen Modulträger gehaltert, so dass durch Aufklappen oder Verschieben des PV-Moduls ein Zugang zu dem oder jedem Beschaltungsteil ermöglicht wird.

Nachfolgend werden Ausführungsbeispiele der Erfindung anhand einer Zeichnung näher erläutert. Darin zeigen:
- Fig. 1: in perspektivischer Darstellung mit Blick auf eine Oberseite eine mobile Photovoltaik-Anlage (PV-Anlage) zur Auflagerung auf einem ISO-Container, mit einem Traggestell und daran befestigen Photovoltaik-Modulen (PV-Modulen),
- Fig. 2: in isolierter perspektivischer Darstellung (d.h. ohne die PV-Module) mit Blick auf die Oberseite das Traggestell der PV-Anlage aus Fig. 1,
- Fig. 3: in Darstellung gemäß Fig. 2 das dortige Traggestell mit einem daran montierten Umrichter der PV-Anlage,
- Fig. 4: in perspektivischer Darstellung mit Blick auf eine Unterseite die PV-Anlage gemäß Fig. 1,
- Fig. 5 und 6: in zwei perspektivischen Detaildarstellungen mit Blick von oben bzw. unten auf eine Ecke des Traggestells eine Koppelstruktur zum mechanischen Koppeln der PV-Anlage mit einem ISO-Container sowie eine hierzu komplementäre Gegenkoppelstruktur zum mechanischen Koppeln der PV-Anlage mit einem weiteren Exemplar der PV-Anlage,
- Fig. 7: in perspektivischer Darstellung mit Blick auf die Oberseite die mobile PV-Anlage aus Fig. 1 in ihrer bestimmungsgemäßen Montageposition auf dem ISO-Container,
- Fig. 8: in einer perspektivischen Detailansicht eine mit einer Container-Ecke des ISO-Containers zusammenwirkende Auflagefläche des Traggestells gemäß Fig. 2,
- Fig. 9: in einem grob schematischen Querschnitt einer alternativen Ausführung des Traggestells einen der Querträger des Traggestells mit einem der Koppelstruktur zugeordneten Verriegelungselement zur Sicherung des PV-Anlage an dem Containerdach sowie mit einer Betätigungsvorrichtung zur Entriegelung des Verriegelungselements, und
- Fig. 10 und 11: in Darstellung gemäß Fig. 9 das dortige Verriegelungselement in unterschiedlichen Stellungen,
- Fig. 12 bis 14: in Darstellung gemäß Fig. 9 eine alternative Ausführung des Verriegelungselements in unterschiedlichen Stellungen, und
- Fig. 15 und 16: in Darstellung gemäß Fig. 9 eine weitere Ausführung des Verriegelungselements in unterschiedlichen Stellungen.

Einander entsprechende Teile und Strukturen sind in allen Figuren stets mit gleichen Bezugszeichen versehen.

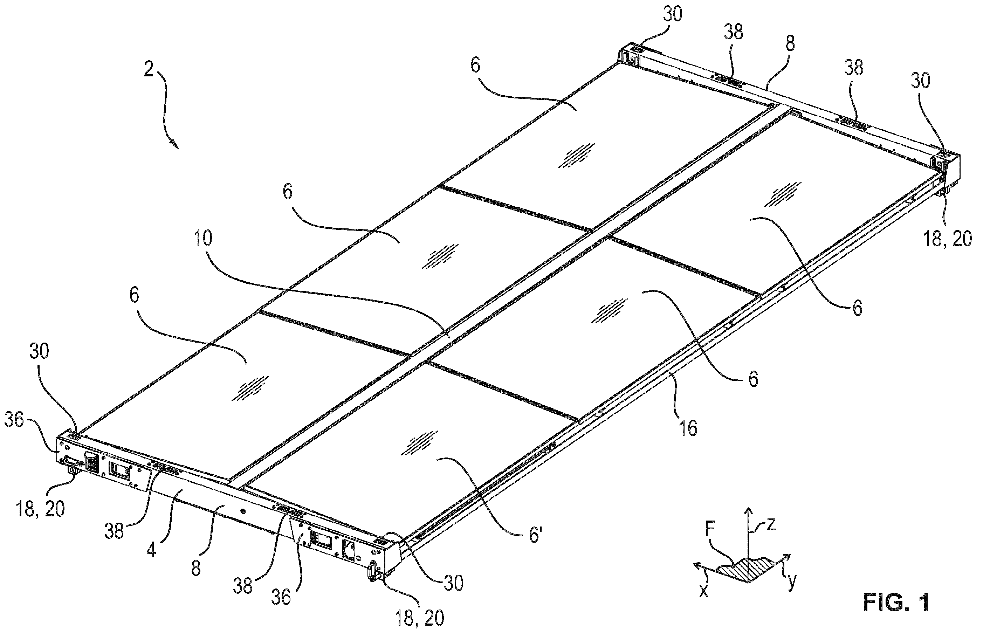

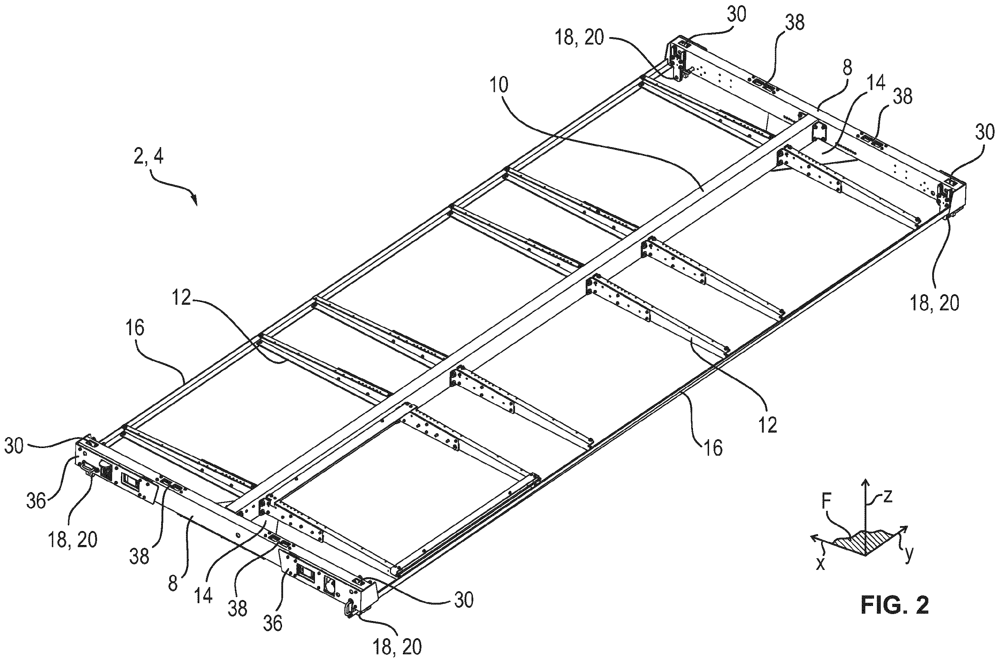

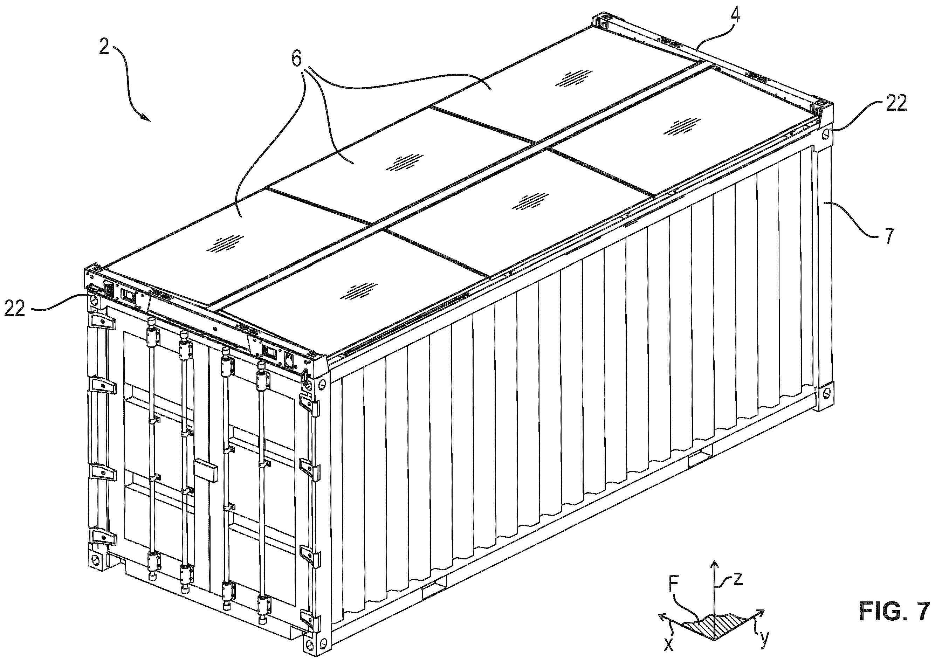

Fig. 1 zeigt eine mobile PV-Anlage 2, die im Wesentlichen aus einem (in Fig. 2 isoliert dargestellten) Traggestell 4 und mehreren - im dargestellten Beispiel sechs - darauf montierten PV-Modulen 6,6` gebildet ist. Die hier dargestellte PV-Anlage 2 ist beispielhaft zur Auflagerung auf einem ISO-Container 7 (Fig. 7) ausgebildet.

Das Traggestell 4 ist im Wesentlichen gebildet durch zwei Querträger 8, einen Längsträger 10 und zwölf Modulträger 12.

Die beiden Querträger 8 sind jeweils durch Stahlrohre mit einem rechteckigen, mit abgerundeten Ecken versehenen Rohrquerschnitt gebildet. Sie erstrecken sich parallel zueinander in einer Querrichtung x. Der Längsträger 10 ist ebenfalls durch Stahlrohr mit einem rechteckigen, insbesondere dem Querschnitt der Querträger 8 entsprechenden, Rohrquerschnitt gebildet. Er erstreckt sich senkrecht zu den Querträgern 8 in einer Längsrichtung y und stößt jeweils mittig auf jeden der Querträger 8. Der Längsträger 10 ist deshalb auch als "zentraler Längsträger" bezeichnet. Die Querträger 8 und der Längsträger 10 bilden somit eine H-förmige Trägerstruktur, die sich in einer durch die Querrichtung x und die Längsrichtung y aufgespannten Traggestell-Ebene F erstreckt. Weitere Längsträger, insbesondere an den sich in Längsrichtung y erstreckenden Kanten des Traggestells 4, sind bei dem Traggestell 4 des Ausführungsbeispiels nicht vorgesehen; der zentrale Längsträger 10 bildet mithin die einzige tragende Struktur, die die Querträger 8 miteinander verbindet.

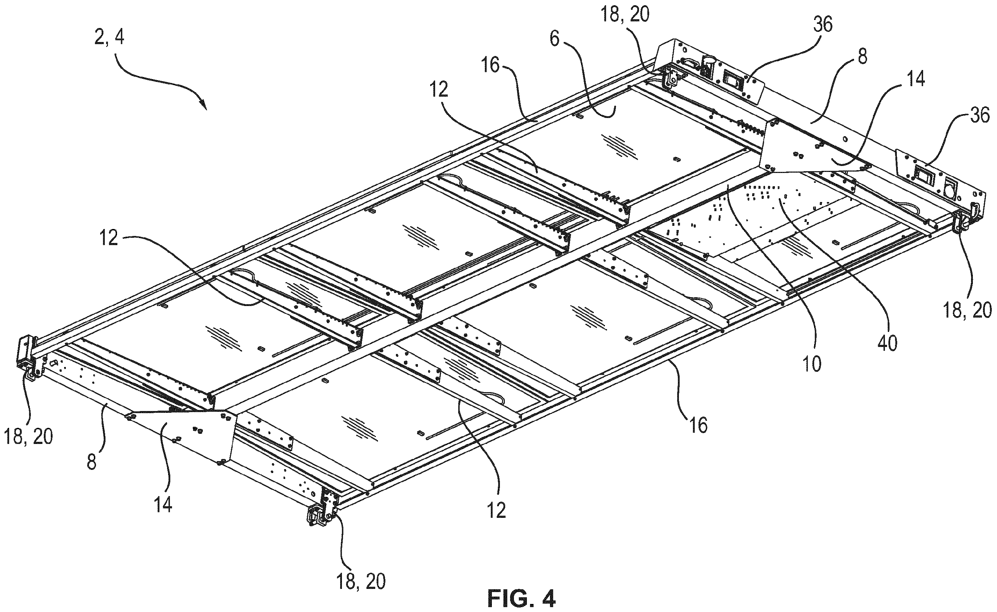

In einer zu der Traggestell-Ebene F (und damit sowohl zu der Querrichtung x als auch zu der Längsrichtung y) senkrechten Hochrichtung z haben die Querträger 8 und der Längsträger 10 jeweils dieselbe Höhe. Die Querträger 8 und der Längsträger 10 bilden somit eine gemeinsame (koplanare) Oberseite aus, die in der perspektivischen Darstellung gemäß Fig. 1 und 2 dem Betrachter zugewandt ist; sie bilden weiterhin auch gemeinsame (koplanare) Unterseite aus, die in der perspektivischen Darstellung gemäß Fig. 1 und 2 von dem Betrachter abgewandt, aber in Fig. 4 sichtbar ist.

An seinen beiden Enden ist der Längsträger 10 mit in Querrichtung abragenden Flanschen (oder Laschen) versehen, mit denen der Längsträger 10 an den Querträgern 8 verschraubt (und somit unmittelbar befestigt) ist. Zur zusätzlichen Stabilisierung dieser Verbindung umfasst das Traggestell 4 zwei dreieckige Versteifungsbleche 14, die jeweils einem der Querträger 8 und dem Längsträger 10 unterlegt und sowohl mit dem jeweiligen Querträger 8 als auch mit dem Längsträger 10 verschraubt sind.

Je zwei in Längsrichtung y benachbarte Modulträger 12 dienen jeweils zur Halterung eines der PV-Module 6,6`. Die Modulträger 12 sind in dem dargestellten Ausführungsbeispiel jeweils durch ein im Querschnitt U-förmig gebogenes Stahlblechteil gebildet. Die Modulträger 12 sind jeweils paarweise in Querrichtung x fluchtend an den gegenüberliegenden Seitenflächen des Längsträgers 10 befestigt, so dass zu beiden Seiten des Längsträgers 10 jeweils sechs der Modulträger 12 von dem Längsträger 10 in bzw. entgegen der Querrichtung x in den zwischen den Querträgern 8 gebildeten Innenraum des Traggestells 4 abstehen. Die offene Seite der U-förmigen Profilform der Modulträger 12 ist dabei - je nachdem auf welcher Seite des Längsträgers 10 der jeweilige Modulträger 12 angeordnet ist - in oder entgegen der Längsrichtung y ausgerichtet. Jeder Modulträger 12 weist eine sich in bzw. entgegen der Querrichtung x verringernde Profilbreite auf. Die Modulträger 12 verjüngen sich somit mit zunehmendem Abstand zu dem Längsträger 10. Anders ausgedrückt weisen sie jeweils - in Hochrichtung z gemessen - eine mit zunehmenden Abstand zu dem Längsträger 10 abnehmende Höhe auf.

Die Modulträger 12 sind freitragend an dem Längsträger 10 gehalten. Sie sind somit nur an dem Längsträger 10 befestigt. Mit den Querträgern 8 sind die Modulträger 12 nur mittelbar über den Längsträger 10 verbunden. Um hierbei Zugspannungen aufgrund einer Torsionsbelastung des Längsträgers 10 durch des Gewicht der Modulträger 12 und der darauf befestigten PV-Module 6,6` möglichst zu vermeiden, sind die einander gegenüberliegend zu beiden Seiten des Längsträgers 10 angeordneten Modulträger 12 jeweils mittels einer den Längsträger 10 durchsetzenden Verschraubung unmittelbar aneinander fixiert.

Die (von dem Längsträger 10 abgewandten) Freienden der in Längsrichtung y nebeneinander angeordneten Modulträger 12 sind zu beiden Längsseiten des Traggestells 4 jeweils durch eine Anschlagschutzleiste 16 verbunden. Die Anschlagschutzleisten 16 dienen zu Schutz der PV-Module 6,6' gegen Beschädigungen durch Stöße und sind in dem dargestellten Beispiel jeweils durch ein Winkelprofil aus Stahlblech gebildet. Jede der beiden Anschlagschutzleisten 16 erstreckt sich von einem Ende eines der Querträger 8 zu dem in Längsrichtung y gegenüberliegenden Ende des anderen Querträgers 8. Die Anschlagschutzleisten 16 sind dabei aber an den Querträgern 8 nicht unmittelbar fixiert; sie sind vielmehr nur mittelbar über die Modulträger 12 und den Längsträger 10 mit den Querträgern 8 verbunden. Die Enden der Querträger 8 können sich daher geringfügig biegen, ohne Kräfte auf die Anschlagschutzleisten 16, und hierüber auf die Modulträger 12 und die darauf befestigten PV-Module 6,6' auszuüben.

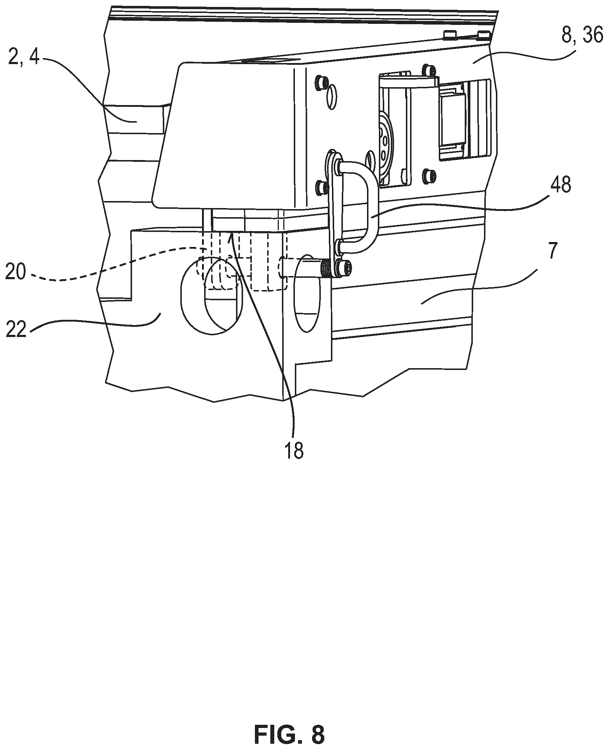

An den Enden der Querträger 8 sind - jeweils unterseitig - vier Auflageflächen 18 ausgebildet, mit denen die PV-Anlage 2 in der bestimmungsgemäßen Montageposition auf einer Unterkonstruktion (z.B. dem Dach des ISO-Containers 7) aufliegt. Im Vergleich zu den Abmessungen der Querträger 8 oder der Gesamtfläche des Traggestells 4 sind die Auflageflächen 18 klein (d.h. annähernd punktförmig) ausgebildet. Beispielsweise nimmt jede der Auflageflächen ca. 5-10 % (insbesondere etwa 7%) der Gesamtbreite und ca. 1-8 % (insbesondere - je nach Containerlänge - etwa 3 % oder 6%) der Gesamtlänge des Traggestells 4 ein. Durch die näherungsweise punktförmigen Auflageflächen 18 wird eine gezielte Einleitung des Gewichts der PV-Anlage 2 in die Unterkonstruktion sichergestellt. Aus Fig. 8 ist ersichtlich, dass die Auflageflächen 18 gegenüber der Unterseite der Querträger 8 und des Längsträgers 10 geringfügig (z.B. um 20 mm) hervorspringen, so dass die PV-Anlage 2 in der Montageposition mit Abstand über einer Unterlage, z.B. dem Containerdach, gehaltert ist.

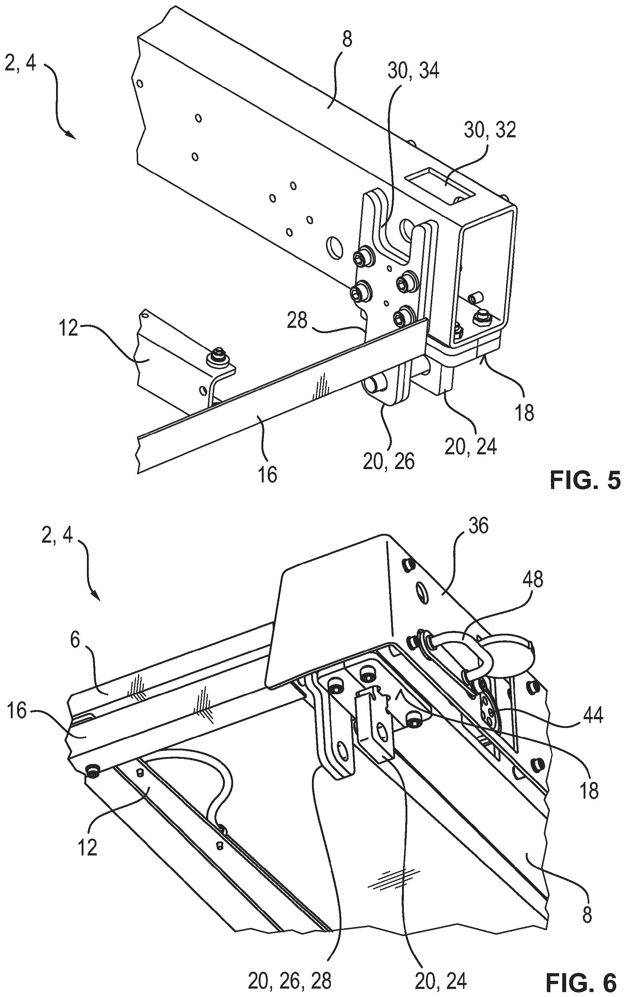

Zur Montage der PV-Anlage 2 auf dem ISO-Container 7 ist im Bereich einer jeden Auflagefläche 18 jeweils eine Koppelstruktur 20 ausgebildet, über die der jeweilige Querträger 8 mit einer Container-Ecke 22 (d.h. einem Container-Eckbeschlag) des ISO-Containers 7 koppelbar ist, s. Fig. 8. Die Koppelstruktur 20 ist in dem dargestellten Beispiel durch zwei zusammenwirkende Vorsprünge 24 und 26 (Fig. 5 und 6) gebildet, die mit einer oberen Öffnung der Container-Ecke 22 in Eingriff gebracht werden können (s. Fig. 8). Ein erster Vorsprung 24 der Koppelstruktur 20 ist dabei in dem dargestellten Beispiel an der Auflagefläche 18 angeformt, während ein zweiter Vorsprung 26 der Koppelstruktur 20 an einem Konturbauteil 28 (Fig. 5) ausgeformt ist, das an dem jeweiligen Querträger 8 angeschraubt ist.

In einem der Koppelstruktur 20 gegenüberliegenden Bereich an der Oberseite der Querträger 8 ist jeweils eine Gegenkoppelstruktur 30 vorgesehen, die dazu ausgebildet ist, die beiden Vorsprünge 24,26 der Koppelstruktur 20 eines weiteren Exemplars der mobilen PV-Anlage 2 aufzunehmen, und die somit die Verbindung mehrerer Exemplare der PV-Anlage 2 zu einem zusammenhängenden Stapel ermöglicht. In dem dargestellten Beispiel ist die Gegenkoppelstruktur 30 durch eine in die Oberseite des Querträgers 8 eingebrachte Öffnung 32 zur Aufnahme des Vorsprungs 24 der Koppelstruktur 20 sowie durch eine gabelartige Kontur 34 (Fig. 5) des Konturbauteils 28 zur Aufnahme des Vorsprungs 26 gebildet.

Das Traggestell 4 umfasst weiterhin vier Winkelbleche aus Stahl, die als Eckschutzbleche 36 mit den Enden der Querträger 8 verschraubt sind und diese Enden gegen Beschädigung aufgrund von Stößen beim Transport oder der Montage bzw. Demontage der PV-Anlage 2 schützen.

Außerdem sind an jedem der Querträger 8 jeweils 2 Ösen 38 (Fig. 1,2) an oder eingebracht, die zur Montage oder Demontage der PV-Anlage 2 eine 4-Punkt-Aufhängung des Traggestells 4 (also eine Aufhängung des Traggestells 4 an vier Stellen) an einem Kranhaken ermöglichen.

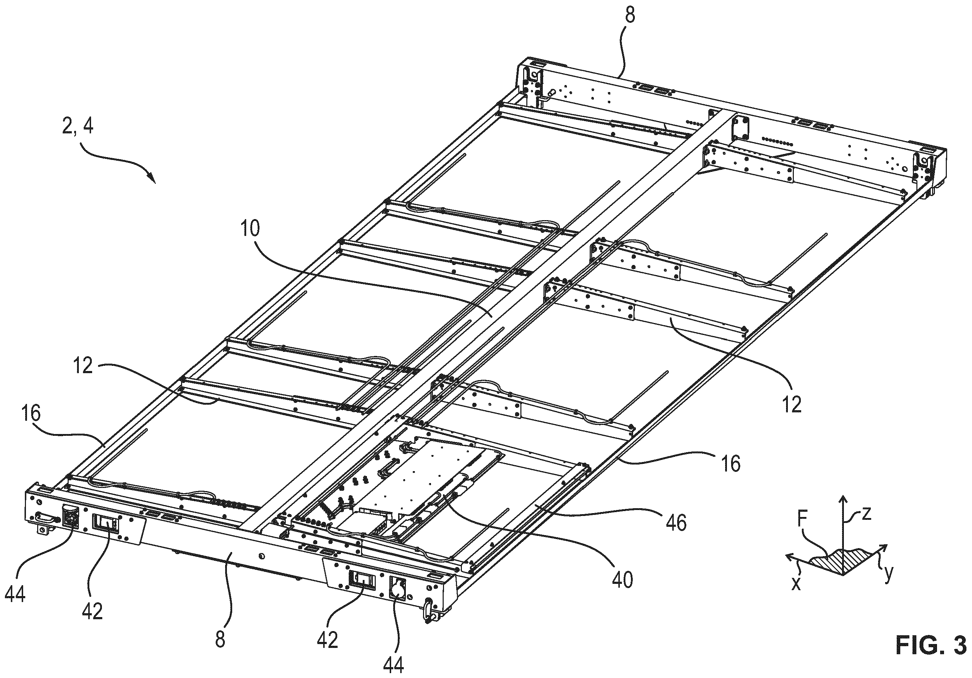

Zur Herstellung der in Fig. 1 gezeigten PV-Anlage 2 werden an jeder Seite des Längsträgers 10 je drei PV-Module 6,6` an den Modulträgern 12 verschraubt, nämlich jeweils eines der PV-Module 6,6` an jeweils zwei in Längsrichtung y benachbarten Modulträgern 12. Die PV-Module 6,6` werden anschließend mit elektrischen Beschaltungsteilen der PV-Anlage 2, nämlich einem Umrichter 40 (Fig. 3), zwei Schutzschalteinrichtungen 42 und zwei Anschlussverbindern 44 (Steckdosen) verkabelt. In einer - nicht dargestellten - Alternativausführung umfasst die PV-Anlage 2 anstelle von zwei Steckdosen eine Steckdose als Stromableitung (Stromausgang) und ein fest angeschlagenes Anschlusskabel als Stromzuleitung (Stromeingang), wobei das Anschlusskabel endseitig mit einem zu der Steckdose komplementären Stecker versehen ist. Das Anschlusskabel ist dabei insbesondere als Spiralkabel ausgebildet, das in einer Ruhelage in einem der Querträger 8 aufgenommen ist und zur elektrischen Verbindung mit einer benachbarten PV-Anlage ausgezogen werden kann.

Die Schutzschalteinrichtungen 42 und die Anschlussverbinder 44 sind in einem der Querträger 8 integriert. Der Umrichter 40 ist gemäß Fig. 3 unter dem PV-Modul 6' (in Fig. 1 vorne rechts) an den zugehörigen Modulträgern 12 befestigt. Um den Umrichter 40 auch im montierten Zustand warten zu können, ist dieses PV-Modul 6' - anders als die anderen PV-Module 6 - nicht fest mit den Modulträgern 12 verschraubt. Vielmehr ist das PV-Modul 6` über ein Scharnier 46 gelenkig an den zugehörigen Modulträgern 12 befestigt. Das PV-Modul 6` kann somit nach oben geklappt werden, um einen Zugang zu dem Umrichter 40 zu ermöglichen. Die Klappbarkeit des PV-Moduls 6' kann durch eine von außen zugängliche Verriegelung (vorzugsweise in Form einer Verriegelungsschraube) gesperrt werden.

Der Herstellung der PV-Anlage 2 erfolgt fern des Einsatzortes. Die PV-Anlage 2 wird somit in vollständig zusammengebautem und verdrahtetem, somit funktionstüchtigen Zustand an den Einsatzort transportiert. Sie ist insofern mobil.

In dem zusammengebauten Zustand gemäß Fig. 1 sind die PV-Module 6,6` derart an den Modulträgern 12 befestigt, dass sie mit geringer Neigung von 5° gegenüber der Querrichtung x dachartig angestellt sind. Die Modulträger 12 sind derart gegenüber der Oberseite des Längsträgers 10 und der Querträger 8 zurückversetzt an dem Längsträger 10 befestigt, dass die auf den Modulträgern 12 befestigten PV-Module 6,6` von dem Längsträger 10 und den Querträgern 8 in Hochrichtung z überragt werden.

Zur Montage wird die PV-Anlage 2 mittels eines Krans auf das Dach des ISO-Containers 7 abgesenkt, so dass die PV-Anlage 2 mit den Auflageflächen 18 auf den oberen Container-Ecken 22 des ISO-Containers 7 zur Auflage kommt und die Vorsprünge 24,26 der Koppelstrukturen 20 in die oberen Öffnungen der Container-Ecken 22 eingreifen. Die PV-Anlage 2 ist somit formschlüssig an dem ISO-Container 7 gehalten. Diese Verbindung kann zusätzlich durch Sicherungsstifte 48 (Fig. 6 und 8) gesichert werden, die durch seitliche Öffnungen der Container-Ecken 22 und Löcher in den Vorsprüngen 24 und 26 der Koppelstruktur 20 gesteckt werden (s. Fig. 8.

In der in Fig. 7 dargestellten Montageposition der PV-Anlage 2 auf dem ISO-Container 7 erstrecken sich die Querträger 8 des Traggestells 4 entlang der oberen Querkanten des ISO-Containers 7. Die PV-Anlage 2 weist bevorzugt eine dem ISO-Container 7 entsprechende Breite und Länge auf, so dass die PV-Anlage 2 die Fläche des Containerdachs vollständig oder zumindest im Wesentlichen vollständig abdeckt.

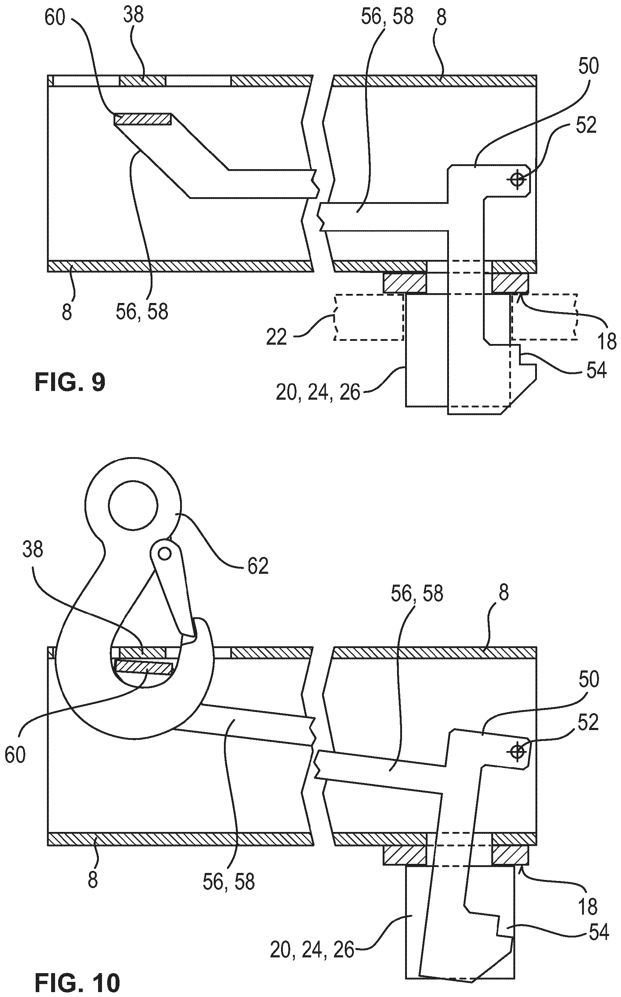

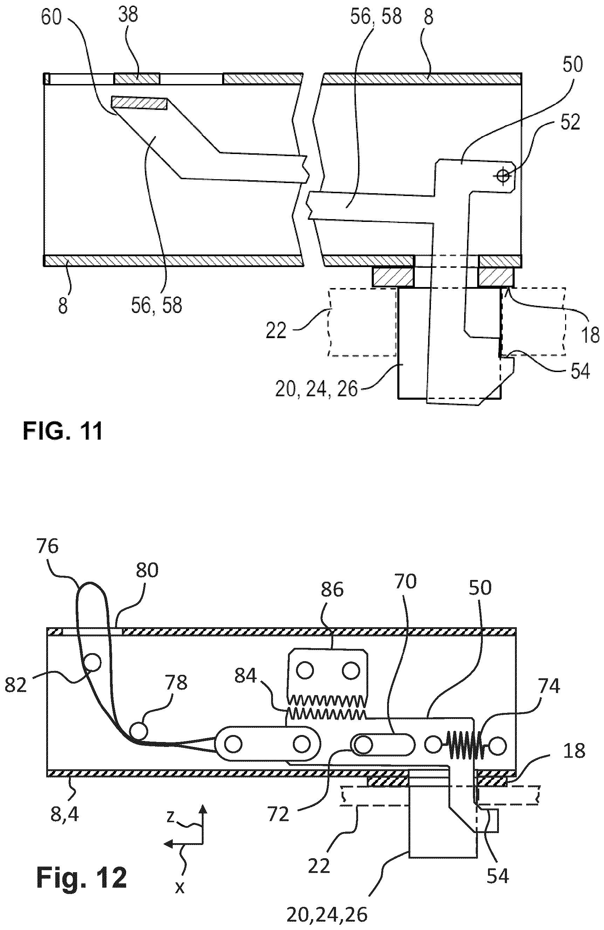

In den Fig. 9 bis 11 ist - grob schematisch und nicht maßstabsgetreu - eine alternative Ausführungsform der PV-Anlage 2 dargestellt, bei der anstelle der Sicherungsstifte 48 zur Sicherung der PV-Anlage 2 an den Container-Ecken 22 im Bereich einer jeden Koppelstruktur 20 jeweils ein schnappnasenförmiges Verriegelungselement 50 vorgesehen ist. Jedes der Verriegelungselemente 50 ist innerhalb des zugeordneten Querträgers 8 um eine Schwenkachse 52 schwenkbar gelagert und ragt in den zwischen den Vorsprüngen 24 und 26 der Koppelstruktur 20 gebildeten Freiraum hinein, so dass eine Verriegelungskontur 54 des Verriegelungselements 50 in einer Entriegelungsstellung (Fig. 10) zwischen den Vorsprüngen 24 und 26 verborgen ist. Wie aus den Fig. 9 bis 11 erkennbar ist, hat die Verriegelungskontur 54 eine stufige (treppenartige) Form, um die PV-Anlage 2 an Container-Ecken 22 unterschiedlicher Materialstärke mit jeweils geringem Spiel sichern zu können. In dem dargestellten Beispiel hat die Verriegelungskontur 54 zwei Stufen. Diesen beiden Stufen entsprechen zwei alternative Verriegelungsstellungen (Fig. 9 und 11), in denen die Verriegelungskontur 54 unterschiedlich weit über Seitenkanten der Vorsprünge 24 und 26 hinausragt.

Die in Fig. 9 dargestellte erste Verriegelungsstellung entspricht der Ruhelage des Verriegelungselements 50, die das letztere aufgrund seines Eigengewichts (sowie optional unter Wirkung einer Feder) automatisch einnimmt. Diese erste Verriegelungsstellung nimmt das Verriegelungselement 50 zur Verriegelung der PV-Anlage 2 an einer Container-Ecke 22 mit vergleichsweise geringer Materialstärke ein, beispielsweise einem Wohn- oder Bürocontainer, dessen dachseitigen Container-Ecken 22 nur aus Blech bestehen. Die in Fig. 11 dargestellte zweite Verriegelungsstellung nimmt das Verriegelungselement 50 zur Verriegelung der PV-Anlage 2 an einer Container-Ecke 22 mit größerer Materialstärke ein beispielsweise bei einem See-Container mit Container-Ecken 22 aus Gussstahl.

In dem Beispiel gemäß Fig. 9 bis 11 ist jedes der Verriegelungselemente 50 mit einer Betätigungsmechanik 56 gekoppelt, die das zugeordnete Verriegelungselement 50 automatisch verriegelt, wenn die PV-Anlage 2 in ihre Montageposition eingehoben oder aus ihrer Montageposition ausgehoben wird. Die Betätigungsmechanik 56 ist in dem Beispiel gemäß Fig. 9 bis 11 durch einen in dem Querträger 8 geführten Hebel 58 gebildet, dessen Hebelende 60 unter einer der Ösen 38 angeordnet ist. Wenn zum Anheben der PV-Anlage 2 eine Anschlagkette mit einem endseitigen Karabinerhaken 62 in die Öse 38 eingehakt wird, drückt der Karabinerhaken 62 den Hebel 58 nach oben, sobald er eine Zugbelastung auf die PV-Anlage 2 ausübt. Der Hebel 58 verschwenkt hierdurch das Verriegelungselement 50 in die in Fig. 10 gezeigte Entriegelungsstellung.

In den Fig. 12 bis 14 ist einer der Querträger 8 des Traggestells 4 mit einer alternativen Ausführung des Verriegelungselements 50 dargestellt. Das Verriegelungselement 50 ist hier als Schieber ausgebildet, der in dem Querträger 8 in Querrichtung x verschiebbar geführt ist. Zur Führung des Verriegelungselements 50 dient hier ein in das Verriegelungselement 50 eingebrachtes Langloch 70, durch das ein am Querträger 8 befestigter Führungsstift 72 hindurchsteht. Durch eine Feder 74 wird das Verriegelungselement 50 in seine - in Fig. 12 dargestellte Verriegelungsstellung - vorgespannt, in der das Verriegelungselement 50 ähnlich wie im Beispiel gemäß Fig. 9 bis 11 mit einer Verriegelungskontur 54 eine in eine Container-Ecke 22 eingebrachte Öffnung formschlüssig hintergreifen kann.

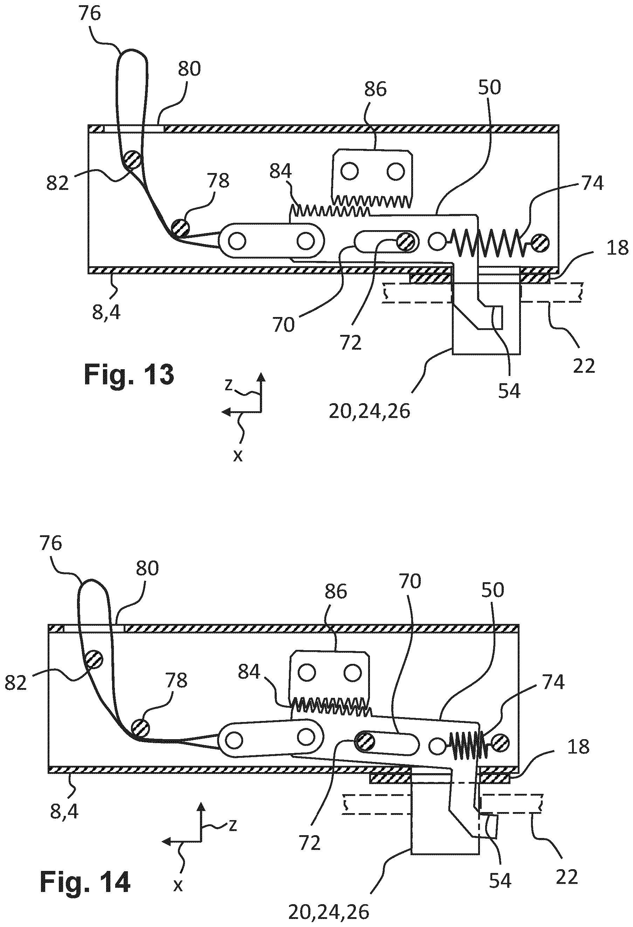

Zur Entriegelung des Verriegelungselements 50, also zur Bewegung des Verriegelungselements 50 in eine in Fig. 13 dargestellte Entriegelungsstellung, dient bei dem Ausführungsbeispiel gemäß Fig. 12 bis 14 eine Bandschlaufe 76, die an dem Verriegelungselement 50 befestigt ist. Die Bandschlaufe 76 ist dabei an einem an dem Querträger 8 befestigten Umlenkstift 78 vorbeigeführt und ragt durch eine Öffnung 80 in der Oberseite des Querträgers 8 aus diesem heraus.

Jeder der vier Auflageflächen 18 des Traggestells 4 ist eines der vorstehend beschriebenen Verriegelungselemente 50 und eine entsprechende Bandschlaufe 76 zugeordnet. Die vier Bandschlaufen 76 dienen hierbei auch - anstelle der Ösen 38, die bei dem Ausführungsbeispiel gemäß Fig. 12 bis 14 nicht vorgesehen sind - zum Anheben der PV-Anlage 2. Durch die beim Anheben auf die Bandschlaufen 76 ausgeübten Zugkräfte werden dabei gleichzeitig die Verriegelungselemente 50 entriegelt. Durch einen durch die Bandschlaufe 76 geführten und an dem Querträger 8 befestigten Sicherungsstift 82 wird verhindert, dass sich die Bandschlaufe 76, falls sie beim Anheben von dem Verriegelungselement 50 abreißen sollte, gänzlich von dem Traggestell 4 lösen kann.

Um zu verhindern, dass sich das Verriegelungselement 50 fehlerhaft von selbst entriegelt (ohne dass eine entsprechende Zugkraft auf die Bandschlaufe 76 ausgeübt wird), ist das Verriegelungselement 50 mit einer Rastkontur 84 versehen, die mit einem an dem Querträger 8 befestigten Rastelement 86 zusammenwirkt.

Im Beispiel gemäß Fig. 12 bis 14 sind die Rastkontur 84 durch eine in eine Oberseite des Verriegelungselements 50 eingebrachte Zahnreihe, und das Rastelement 86 durch eine entsprechend ausgebildete Zahnstange gebildet.

Wenn auf die an einem Untergrund wie z.B. den Container-Ecken 22 verriegelten PV-Anlage 2 (z.B. verursacht durch eine Windlast) eine Kraft ausgeübt wird, durch die die PV-Anlage 2 geringfügig von dem Untergrund abgehoben wird, verkantet sich das sich in der Verriegelungsstellung befindliche Verriegelungselement 50 in dem Querträger 8. Hierdurch gerät die Rastkontur 84 des Verriegelungselements 50 - wie in Fig. 14 dargestellt ist - in Eingriff mit dem Rastelement 86, so dass eine Verschiebung des Verriegelungselements 50 in Querrichtung x blockiert ist.

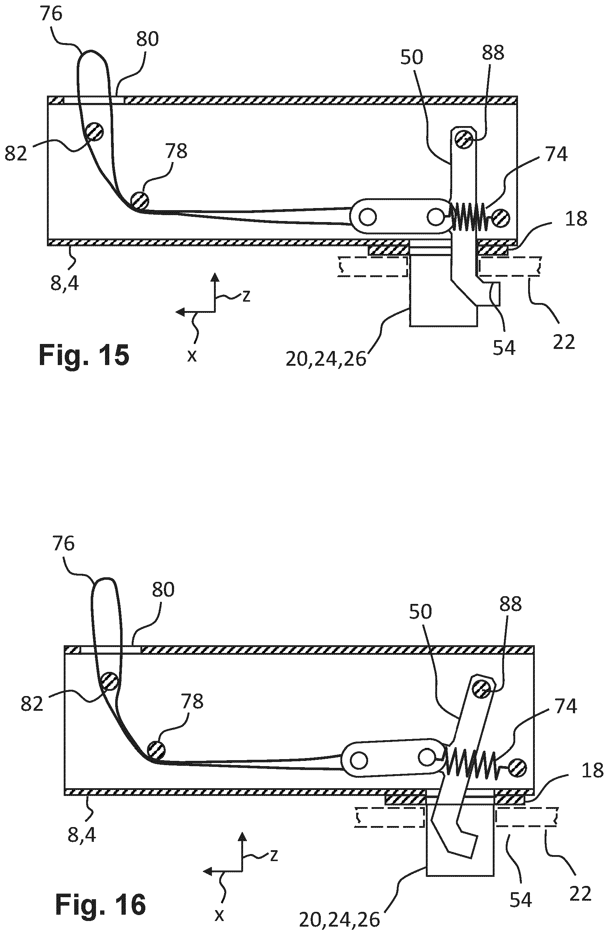

Bei einem weiteren Ausführungsbeispiel, das in den Fig. 15 und 16 gezeigt ist, ist das Verriegelungselement 50 - ähnlich wie im Beispiel gemäß Fig. 9 bis 11 - um eine Schwenkachse 88 in dem Querträger 8 gelagert, Das Verriegelungselement 50 wird hier aber - ähnlich zu dem Beispiel gemäß Fig. 15 und 16 - durch die Feder 74 in der in Fig, 15 gezeigten Verriegelungsstellung vorgespannt. Ebenso wie in dem Beispiel gemäß Fig. 15 und 16 ist das Verriegelungselement 50 hier mit der Bandschlaufe 76 verbunden und kann durch Zug an derselben in die in Fig. 16 gezeigte Entriegelungsstellung verschwenkt werden.

In alternativen Ausführungsformen ist jedes der Verriegelungselemente 50 über eine (insbesondere für alle Verriegelungselemente 50 gemeinsame) Betätigungsmechanik mit einem händisch bedienbaren Betätigungshebel gekoppelt. In einer wiederum alternativen Ausführungsform ist jedes der Verriegelungselemente 50 elektrisch verriegelbar und /oder entriegelbar.

In allen vorstehend beschriebenen Beispielen kann die Verriegelungskontur 54 des Verriegelungselements 50 unterschiedlich ausgeführt sein. Alternativ zu einer stufigen Form gemäß Fig. 9 bis 11 und der angefasten (also mit einer Fase, d.h. einer schrägen Kante versehenen) Form gemäß den Fig. 12 bis 16 kann die Verriegelungskontur 54 auch eckig (d.h. L-förmig) oder mehr oder weniger gerundet ausgebildet sein.

Die Erfindung wird anhand des vorstehend beschriebenen Ausführungsbeispiels besonders deutlich, ist auf dieses aber keineswegs beschränkt. Vielmehr können weitere Ausführungsbeispiele der Erfindung aus den Ansprüchen und der vorstehenden Beschreibung abgeleitet werden.

### Bezugszeichenliste

- 2: PV-Anlage
- 4: Traggestell
- 6, 6': PV-Modul
- 7: ISO-Container
- 8: Querträger
- 10: Längsträger
- 12: Modulträger
- 14: Versteifungsblech
- 16: Anschlagschutzleiste
- 18: Auflagefläche
- 20: Koppelstruktur
- 22: Container-Ecke
- 24: Vorsprung
- 26: Vorsprung
- 28: Konturbauteil
- 30: Gegenkoppelstruktur
- 32: Öffnung
- 34: Kontur
- 36: Eckschutzblech
- 38: Öse
- 40: Umrichter
- 42: Schutzschalteinrichtung
- 44: Anschlussverbinder
- 46: Scharnier
- 48: Sicherungsstift
- 50: Verriegelungselement
- 52: Schwenkachse
- 54: Verriegelungskontur
- 56: Betätigungsmechanik
- 58: Hebel
- 60: Hebelende
- 62: Karabinerhaken
- 70: Langloch
- 72: Führungsstift
- 74: Feder
- 76: Bandschlaufe
- 78: Umlenkstift
- 80: Öffnung
- 82: Sicherungsstift
- 84: Rastkontor
- 86: Rastelement
- 88: Schwenkachse

- x: Querrichtung
- y: Längsrichtung
- z: Hochrichtung
- F: Traggestell-Ebene

## Patentansprüche

1. Traggestell (4) für eine mobile Photovoltaikanlage (2), insbesondere zur Auflagerung auf einem Container (7),
- mit zwei zueinander parallelen, sich in einer Querrichtung (x) erstreckenden Querträgern (8), an deren jeweiligen Enden insgesamt vier Auflageflächen (18) zur Auflagerung des Traggestells (4) auf einer Unterkonstruktion (22) ausgebildet sind,
- mit einem zentralen Längsträger (10), der sich in einer Längsrichtung (y) senkrecht zu den Querträgern (8) erstreckt und jeweils mittig mit beiden Querträgern (8) verbunden ist, und
- mit mehreren Modulträgern (12) zur Halterung von Photovoltaikmodulen (6,6`), wobei jeder der Modulträger (12) tragend an dem zentralen Längsträger (10) befestigt sind.

2. Traggestell (4) nach Anspruch 1,
wobei die von dem Längsträger (10) abgewandten Freienden der Modulträger (12) mit den Querträgern (8) nur über den zentralen Längsträger (10) verbunden sind.

3. Traggestell (4) nach Anspruch 1 oder 2,
wobei der zentrale Längsträger (10) eine Höhe aufweist, die über 50%, bevorzugt über 75%, insbesondere über 90% der Höhe der Querträger (8) beträgt.

4. Traggestell (4) nach Anspruch 1 oder 2,
wobei der Längsträger (10) und die Querträger (8) eine gleiche Höhe aufweisen.

5. Traggestell (4) nach einem der Ansprüche 1 bis 4,
wobei der Längsträger (10) als Rohr, insbesondere mit rundem Querschnitt oder rechteckigem Querschnitt mit gerundeten Ecken, ausgebildet ist.

6. Traggestell (4) nach einem der Ansprüche 1 bis 5,
wobei die Querträger (8) jeweils als Rohr, insbesondere mit rundem Querschnitt oder rechteckigem Querschnitt mit gerundeten Ecken, ausgebildet sind.

7. Traggestell (4) nach Anspruch 6,
wobei mindestens ein elektrisches Beschaltungsteil für die Photovoltaikmodule (6,6`), insbesondere ein Umrichter (40) oder Stromwandler, eine Schutzschalteinrichtung (42), ein Anschlussverbinder (44) oder/oder ein Anschlusskabel, in einem der Querträger (8) aufgenommen ist.

8. Traggestell (4) nach einem der Ansprüche 1 bis 7,
mit mindestens zwei Versteifungsblechen (14), über die der Längsträger (10) mit den beiden Querträgern (8) verbunden ist oder die eine unmittelbare Verbindung des Längsträgers (10) mit den beiden Querträgern (8) zusätzlich stabilisieren.

9. Traggestell (4) nach einem der Ansprüche 1 bis 8,
wobei sich zwischen einander in Längsrichtung (y) gegenüberliegenden Enden der Querträger (8) jeweils eine Anschlagschutzleiste (16) erstreckt.

10. Traggestell (4) nach Anspruch 9,
wobei jede der Anschlagschutzleisten (16) nicht unmittelbar oder nur über eine bewegliche oder elastische Verbindung unmittelbar an den Querträgern (8) fixiert ist.

11. Traggestell (4) nach einem der Ansprüche 1 bis 10,
wobei die Auflageflächen (18) an den Enden der Querträger (8) gegenüber einer Unterseite der Querträger (8) und einer Unterseite des Längsträgers (10) hervorspringen.

12. Traggestell (4) nach einem der Ansprüche 1 bis 11,
wobei in dem jeweiligen Bereich der Auflageflächen (18) an den Enden der Querträger (8) jeweils eine Koppelstruktur (20) ausgebildet ist, über die der Querträger (8) mit einer Container-Ecke (22) eines ISO-Containers koppelbar ist.

13. Traggestell (4) nach Anspruch 12,
wobei an den Enden der Querträger (8) gegenüberliegend zu den im Bereich der Auflageflächen (18) ausgebildeten Koppelstrukturen (20) jeweils eine Gegenkoppelstruktur (30) zur Kopplung des Traggestells (4) mit einem weiteren Traggestell (4) ausgebildet ist.

14. Traggestell (4) nach einem der Ansprüche 1 bis 13,
wobei sich die Modulträger (12) mit zunehmenden Abstand zu dem zentralen Längsträger (10) verjüngen.

15. Traggestell (4), insbesondere nach einem der Ansprüche 1 bis 14,
mit mindestens einem verschiebbaren oder verschwenkbaren Verriegelungselement (50), mit dem die PV-Anlage (2) in ihrer Montageposition auf einem Untergrund (22) fixierbar ist.

16. Mobile Photovoltaikanlage (2), insbesondere zur Auflagerung auf einem Container (7), mit einem Traggestell (4) nach einem der Ansprüche 1 bis 15 und mit mehreren auf den Modulträgern (12) des Traggestells (4) befestigten Photovoltaikmodulen (6,6`).
